# EUROPEAN PATENT APPLICATION

(11) **EP 3 639 993 A1**
(43) Date of publication of application: **22.04.2020**
(21) Application number: 19203286.0
(22) Date of filing: 15.10.2019
(51) Int. Cl.: B27B 5/06, B23D 47/04

(54) **CUTTING MACHINE**

(30) Priority: 15.10.2018 IT 201800009460
(71) Applicant: BIESSE S.p.A., 61100 Pesaro (IT)
(72) Inventor: LATTANZI, Lorenzo, 61121 PESARO (PU) (IT)
(74) Representative: Manconi, Stefano

(57) **Abstract**

A cutting machine (1) for panels (CP) provided with a frame (10) comprising a first beam (120) and a second beam (122) which develop parallelly along a given feeding direction (D); a feeding device (20) for the panels (CP) carried in a sliding manner by the frame (10) between the first and second beams (120) (122) and provided with a plurality of pushing members (60)(62) distributed between said first and second beams (120) (122) and shaped for aligning the head of said panels (CP); the feeding device (20) comprising a third self-propelled beam (124) carried transversely between said first and second beams (120) (122) in a sliding manner along the direction (D); the first beam (120) having a guide (1201) for a first slide (1241) carried at the end by said third beam (124); the third beam (124) carrying, at the front, a first assembly (61) of the pushing members (60); the feeding device (20) comprising a mobile self-propelled equipment (30) coupled in a sliding manner to the guide (1201) via a second slide (31) facing the third beam (124) and carrying, at the front, a second assembly (63) of the pushing members (62) arranged beside said first assembly (61) .

## Description

### CROSS-REFERENCE TO RELATED APPLICATIONS

This patent application claims priority from Italian patent application no. 102018000009460 filed on October 15, 2018.

### TECHNICAL FIELD

The invention relates to a cutting machine. In particular, the invention relates to a cutting machine for the Cartesian cut of panels. More in detail, the invention relates to a cutting machine for the Cartesian cut of panels provided with a plurality of feeding members distributed crosswise.

### DESCRIPTION OF THE STATE OF THE ART

In the panel cutting field, cutting machines are used, which share a structural base combination in which a frame has a panel support plane, said plane corresponding to a lateral abutment surface obtained on the side of the frame. The latter normally carries two longitudinal beams which, in turn, support a cross beam provided with respective operating devices and movable from and to a cutting station. The beam is further provided with respective front gripping means, which are engaged in order to move the panels on the support plane and feed them to the cutting station. This structural combination can be associated with a mobile feeding equipment, which is carried by one of the longitudinal beams on the side of the lateral abutment surface, wherein the mobile equipment is also provided with respective front gripping means, which are designed and shaped so as to cooperate with the ones of the cross beam. In patent EP 2316602, the movements of the cross beam and of the mobile equipment are independent and based on a wheel-rack model and the longitudinal beam arranged on the side of the lateral abutment surface carries, hanging from the bottom, the mobile equipment and supports on the side the cross beam through a respective end portion. The latter carries, hanging from it, respective front gripping members, with the consequence that this structural peculiarity leads to the use of large-sized beams and of mechanical drive members dedicated to each one of the longitudinally moving parts. Therefore, this solution is associated with high purchase and maintenance costs. In patent EP 0963270, the mobile equipment is carried by the beam, but it can move along three orthogonal directions. For this reason, the cross beam must be carefully sized so as to limit the local twist thereof caused by significant loads when the panels are moved on the support plane. In patent EP 2540429, the mobile equipment is longitudinally operated by the cross beam, to which it is connected through a coupling device with an adjustable longitudinal extension based on the presence of locking devices. Hence, in this solution, the adjustment of the relative position of the mobile equipment relative to the cross beam must be carried out by acting upon the locking devices and upon the movements of the cross beam.

It can easily be understood that these solutions, on the one hand, are excessively large-sized and complicated, like in patents EP 2316602 and EP 0963270, and, on the other hand, either require an expensive and challenging maintenance or are too basic, hence inadequate to simplify the operators' job at reasonable costs.

Owing to the above, a panel cutting machine is needed, which is not affected by the drawbacks described above, whose structure, as a whole, is simple and whose beam-shaped components are stressed by twist in a limited manner so that they can be slender, have a small mass and, hence, a reduced cost and a small inertia, thus being suited to be operated with a reduced power and with a limited energy absorption by low-power and high-accuracy actuators. To this regard, the machine should hopefully have two panel moving assemblies, which are independent, can be promptly operated, are conceived in a simple manner and are not expensive, so that they can also be easily subjected to maintenance.

### SUMMARY OF THE INVENTION

The present invention relates to a cutting machine. In particular, the invention relates to a cutting machine for the Cartesian cut of panels. More in detail, the invention relates to a cutting machine for the Cartesian cut of panels provided with a plurality of feeding members distributed crosswise.

The problems discussed above are solved by the invention according to at least one of the appended claims. According to some embodiments of the invention, there is provided a cutting machine provided with a frame comprising a first beam and a second beam, which develop parallel to one another along a given feeding direction and laterally delimit a support plane; a feeding device, which is carried by said frame in a sliding manner between said first and second beam along said direction and is provided with a plurality of pushing members distributed between said first and second beam; said feeding device comprising a third self-propelled beam, which is carried crosswise between said first and second beam in a sliding manner along said direction; said first beam having a first guide for a first slide carried, at the end, by said third beam; said third beam carrying, at the front, a first assembly of said pushing members; said feeding device comprising a mobile self-propelled equipment, which is coupled in a sliding manner to said first beam through a second slide facing or arranged under said third beam above said support plane and carries, at the front, a second assembly of said pushing members arranged beside said first assembly.

In some cases, it can be useful for said first and second slide to be both coupled to said first guide.

In other cases, said feeding device comprises a rack carried longitudinally by said first beam on the side of said support plane, a first rotary actuator carried by said third beam, at least one cogwheel meshing with said rack and a drive shaft which couples said wheel to said actuator in an angularly fixed manner.

In some embodiments of the invention, said first beam has a substantially vertical inner face on the side of said support plane; said equipment being completely contained in a volume delimited by said support plane, by said inner face and by said third beam.

In other cases, the feeding device comprises a second actuator carried by said equipment; said equipment supporting a pinion meshing with said rack and operated by said second actuator so as to operate said equipment in said direction.

In case this is deemed to be appropriate, said first beam has a second longitudinal guide carried by said first beam in a position below said first guide for said second slide and a second longitudinal rack; said equipment carrying a second actuator and a further pinion, which can be operated by said second actuator and meshes with said rack for operating said equipment in said direction. According to a variant of the invention, said equipment comprises a motorised screw-nut screw pair, which couples said third beam and said equipment so as to selectively control a relative movement along said direction.

On the other hand, said operating means and said mobile equipment can validly be connected by a chain designed to carry power supply cables and/or fluid dynamic supply cables.

In some cases, the machine comprises control means to control the relative position of said mobile equipment relative to said third beam, which are designed to allow for relative displacements between said third beam and said mobile equipment along said given direction.

In other cases, said control means are mechanical control means and comprise a rod ending with a first hook and extending along said given direction; said rod being selectively carried by said third beam or by said equipment; a second hook being selectively carried by said equipment or by said third beam longitudinally facing said first hook.

According to a preferred embodiment of the invention, said third beam has longitudinal abutment means for a rear element of said mobile equipment.

Furthermore, each one of said first and second gripping members is provided with a front clamp.

### BRIEF DESCRIPTION OF THE FIGURES

Further features and advantages of the cutting machine according to the invention will be best understood upon perusal of the following description, with reference to the accompanying drawings showing some non-liming embodiments thereof, wherein identical or corresponding parts of the machine are identified by the same reference numbers: In particular:
- figure 1 is a schematic perspective view of a cutting machine according to the invention with parts removed for greater clarity;
- figure 2 shows a detail of figure 1 on a larger scale and with parts removed for greater clarity;
- figure 3 is a schematic front view of figure 2;
- figure 4 is a schematic perspective view of figure 3 with parts removed for greater clarity;
- figure 5 is a schematic perspective view of a variant of figure 3 on a smaller scale and with parts removed for greater clarity; and
- figure 6 is a variant of figure 3 with parts removed for greater clarity.

### DETAILED DESCRIPTION OF THE INVENTION

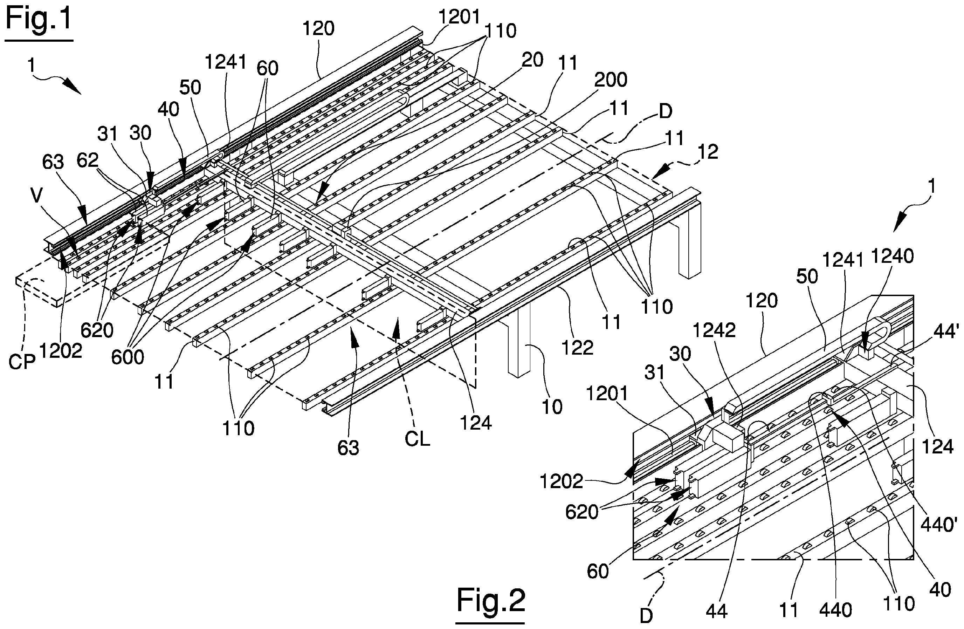

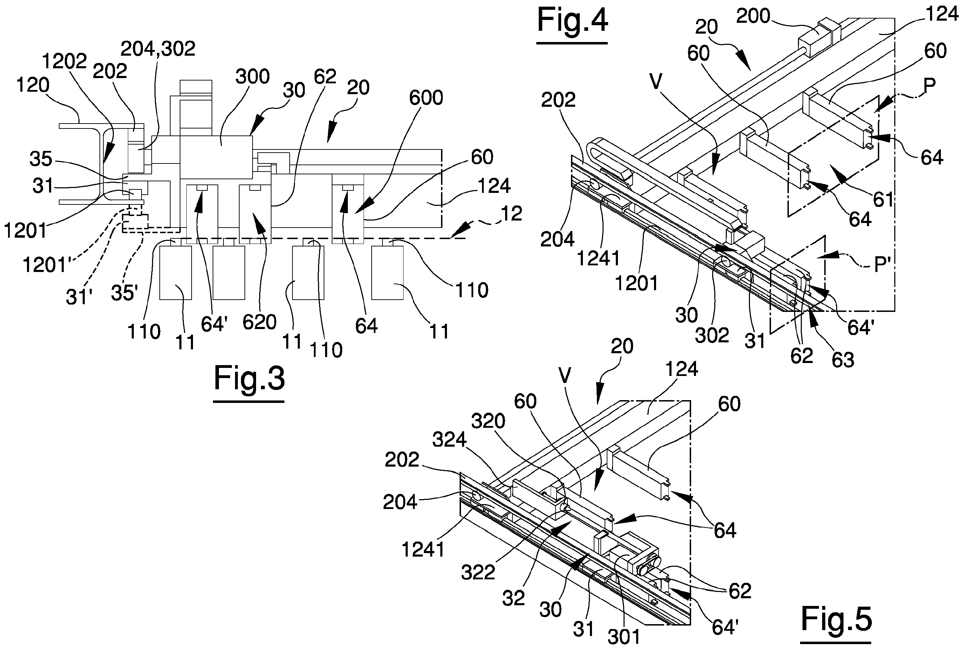

In figure 1, number 1 indicates, as a whole, a cutting machine 1 for wood panels CP with a substantially rectangular shape, stacked or even singularly. Figure 1 shows only one of said panels with a broken line, so as to make the drawing more understandable. In particular, the machine 1 has a frame 10, which comprises a plurality of longitudinal members 11, which develop parallel to one another in a given feeding direction D, each having a plurality of roller supports 110 defining a horizontal support plane 12 for the panels CP. The frame 10 further comprises a first beam 120 and a second beam 122, which are substantially horizontal, laterally delimit the plane 12 and develop along the direction D. With particular reference to figure 3, the first beam 120 has a substantially vertical inner face 1202 on the side of said support surface 12. In the embodiment shown in the accompanying figures, the first beam 120 and the second beam 122 are HE beams, though without limiting the scope of protection of the invention.

With reference to figure 1, the machine 1 further comprises a feeding device 20 to feed the panels CP to a known cutting station, which, in order to make the drawing more understandable, is indicated only with a relative cutting plane CL represented with a broken line. The device 20 is carried by the frame 10 in a sliding manner between the first and the second beam 120/122 along the direction D and is provided with a plurality of pushing members 60 and 62, which are distributed between the first beam 120 and the second beam 122, respectively, and are shaped so as to strike against the heads of the panels CP by means of respective front clamps 64 and 64', which allow them to be held and moved with a rigid motion with the pushing members 60 and 62 along the direction D during the operations carried out to move the panels CP on the support plane 12, said clamps being represented in a simplified manner in order to make the drawing more understandable. It should be pointed out that each pushing member 60/62 is delimited, at the front, by a flat portion 600/620 respectively defining, in use, a vertical support plane P and P', said planes being only visible in figure 4, where they are shown as closed areas delimited by dash-dotted lines.

The feeding device 20 comprises a third self-propelled beam 124, which is arranged crosswise to the direction D between the first and the second beam 120/122 and is carried by them in a sliding manner through respective ends along the direction D. With particular reference to figure 3, the first beam 120 carries a guide 1201 close to the respective inner face 1202 for a first slide 1241, which is carried, at the end, by the third beam 124. With particular reference to figures 3-5, the feeding device 20 further comprises a rack 202, which is longitudinally carried by the first beam 120 facing the guide 1201, a first rotary actuator 200 carried by the third beam 124, at least one cogwheel 204 meshing with the rack 202 and a drive shaft 206, which couples the wheel 204 to the actuator 200 in an angularly fixed manner.

Furthermore, the third beam 124 carries, at the front, a first assembly 61 of pushing members 60.

With particular reference to figure 3, the feeding device 20 further comprises a self-propelled mobile equipment 30, which is carried by the first beam 120 and, in particular, is coupled to the guide 1201 in a sliding manner through a second slide 31 by means of a respective substantially "L"-shaped bracket 35 facing the third beam 124 and above the support plane 12. Said mobile equipment 30 carries, at the front, a second assembly 63 of pushing members 62, which, according to what is disclosed and shown herein, is arranged beside the first assembly 61.

The mobile equipment 30 carries a second actuator 300 and comprises a pinion 302, which meshes with the rack 202 and can be operated by the second actuator 300 so as to move the equipment 30 in the direction D. The third beam 124 and the mobile equipment 30 are connected by a chain 50 with a given length, which is designed to lead to the equipment 30 power supply cables and/or fluid dynamic supply cables from the third beam 124 or vice versa, depending on the design specifications. It should be pointed out that the first and the second actuator 200 and 300 can be either electric or fluid dynamic; furthermore, according to figures 1 and 2, the chain 50 is on the outside of the beams 120 and 124. This design choice allows for a simplification of the mechanical machining to be carried out on the structural components (beams 120, 124 and equipment 30) in order to allow them to be electrically and fluid dynamically connected and to allow the control devices (sensors and solenoid valves) of the first and of the second actuator 200 and 300, which are known and not shown herein, to be remotely operated, besides allowing for a simplification of possible maintenance/replacement operations.

With particular reference to figure 2, the third beam 124 has a longitudinal abutment 1240 for a rear element 1242 of the mobile equipment 30 so as to define a rear reference for the equipment 30. It can easily be understood that, in use, the presence of said abutment 1240 allows the equipment 30 to be finely placed against the beam 124 so as to define one single body, since, in this situation, the vertical support planes P and P' defined by the flat portions 600 and 620, respectively, of the pushing members 60 and 62 are aligned. In use, once the relative actuator 300 is in "neutral", the beam 124 is suited to place the equipment 30, by pushing it, with a placing precision of the same placing class associated with the third beam 124, given the constancy of the dimensions of the components of the third beam 124 and of the equipment 30 involved in the precise placing of the equipment 30 along the direction D. This operating configuration of the machine 1 is particularly useful when panels CP must be handled (on the plane 12), whose width, measured crosswise to the direction D, is greater than the width of the equipment 30.

On the other hand, the machine 1 comprises a control device 40 to control the relative position of the equipment 30 relative to the third beam 124, said control device being suited to allow for relative displacements between said third beam 124 and the mobile equipment 30 with half the extension of said chain 50 measured along said given direction D.

In particular, in figure 2, said control device 40 is mechanical and comprises a rod 44 carried by the equipment 30 and a rod 44' carried by the third beam 124, both rods extending along the given direction D and ending with a respective hook 440 and 440'. These hooks face one another and are orthogonal to the direction D so as to be able to interact through contact determining the maximum distance possible between the third beam 124 and the mobile equipment 30.

The total extension of the two rods 44 and 44' and the conformation of the respective hooks 440 and 440' determine the maximum extension of the distance at which the equipment 30 and the third beam 124 can arranged in operation. Therefore, it is possible to think that the sum of the length of the two rods 44 and 44' is equal to the maximum distance allowed by the chain 50, including limit cases in which the rod 44 or the rod 44' has zero length and, hence, the respective hook is carried by the equipment 30 or by the third beam 124.

The use of the machine 1 can easily be understood from the description and does not require further explanations.

On the other hand, it should be pointed out that the equipment 30 is completely contained in a volume V, which is delimited by the support plane 12, by the inner face 1202 of the first beam 120 and by the third beam 124, and that the machine 1 is designed to cut wood panels CP, but its structure would also allow rectangular slabs of any material, for example, though without limitations, metal or plastic materials, to be cut. It can easily be understood that the nature of the material could require the definition of particular design specifications for the machine 1 or for respective components.

Finally, the machine 1 described and shown herein can be subjected to changes and variations, without for this reason going beyond the scope of protection of the invention. For example, with particular reference to figure 5, the equipment 30 could be operated with relative movement relative to the third beam 124 along the direction D by an actuator 301 carried by the equipment 30, which is mechanically coupled to a transmission 32, which comprises a nut screw 320, which is also carried by the equipment 30, and a threaded rod or screw 322, which is parallel to the direction D and is carried by the third beam 124 through a respective bracket 324. Naturally, it goes without saying that the nut screw 320 and the threaded rod 322, just like the actuator 301 could be carried by the dual member in relative movement. In this case, the head of the threaded rod 322 could selectively have an axial abutment member with a cross size which is greater than the diameter of the screw 322, said member being known and not shown herein. Naturally, in this embodiment, the actuator 301 could be carried by the beam 124, though without changing the scope of protection of the invention.

On the other hand, the "L"-shaped bracket 35 could be overturned by 180°, like in figure 3, where it is represented with a broken line and indicated with reference number 35', and the first guide 1201 could be doubled with an additional guide 1201' (which is also represented with a broken line), which is also carried by the first beam 120 in a position under and opposite the first guide 1201. In this case, the slide 31 is replaced by a slide 31' (which is also represented with a broken line), which is coupled to the additional guide 1201' in a sliding manner, whereas the pinion 302 always meshes with the rack 202.

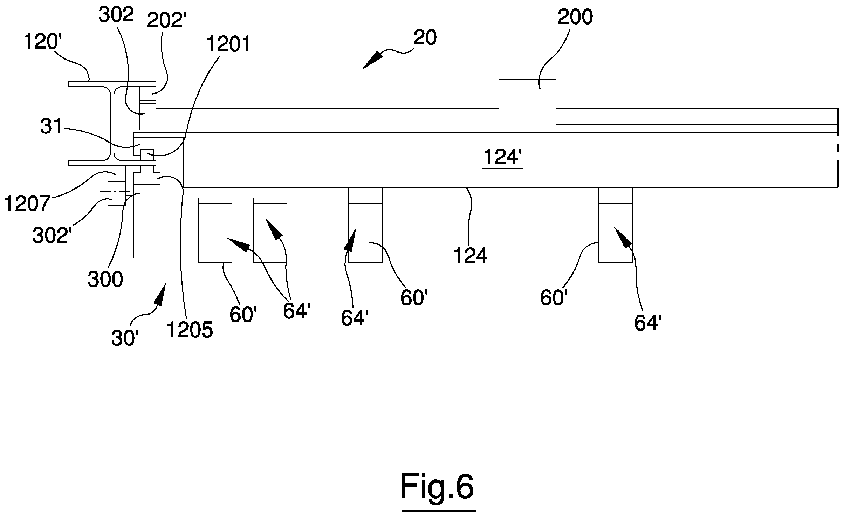

Furthermore, with reference to figure 6, it can be useful to couple the equipment 30 to the first beam 120 in a position under the beam 124 rather than in a facing position, visible in figures 1-5. In this case, the first beam 120' has a second longitudinal guide 1205 for said second slide 31 in a position under the first guide 1201 and a second longitudinal rack 1207, wherein both the second guide 1205 and the second rack 1207 are parallel to the given direction D. Furthermore, the equipment 30' carries a second actuator 300' and a further pinion 302', which can be operated by the second actuator 300' and meshes with the rack 202' to operate said equipment 30 in the direction D. Owing to the above, it can easily be understood that the machine 1 has a particularly simple and well-designed structure from the mechanical point of view, so that the forces exchanged between the respective moving members are easily balanced and of a small extent. For this reason, the relative beam-shaped components 120, 122, 124 and the mobile equipment 30 are stressed by twist and bending moment in a limited manner, so that they can be sized so as to have a small mass and a small inertia, thus being able to be operated with a reduced power and with a limited energy absorption by low-power and high-accuracy actuators. Therefore, the manufacturing costs of the machine 1 and the relative management and maintenance costs are particularly modest.

## Claims

1. A cutting machine (1) for panels (CP) provided with a frame (10) comprising a first beam (120) and a second beam (122) which develop parallelly along a given feeding direction (D) and laterally delimit a support plane (12); a feeding device (20) for said panels (CP) carried in a sliding manner from said frame (10) between the said first and second beams (120) (122) along said direction (D) and provided with a plurality of pushing members (60) (62) distributed between said first and second beams (120) (122) and shaped for aligning the head of said panels (CP); said feeding device (20) comprising a third self-propelled beam (124) carried transversely between said first and second beams (120) (122) in a sliding manner along said direction (D); said first beam (120) having a first guide (1201) for a first slide (1241) carried by said third beam (124); said third beam (124) carrying, at the front, a first assembly (61) of said pushing members (60); **characterised in that** said feeding device (20) comprises a mobile self-propelled equipment (30) (30') coupled in a sliding manner to said first beam (120) via a second slide (31) facing or arranged in an underlying position in respect said third beam (124) above said support plane (12) and carries, at the front, a second assembly (63) of said pushing members (62) arranged beside said first assembly (61).

2. The machine according to claim 1, **characterised in that** said first and said second slides (1241) (31) (31') are both coupled to said first guide (1201) or respectively to a first guide (1201) and to a second guide (1201') carried on the opposite sides of said first beam (120).

3. The machine according to claim 1 or 2, **characterised in that** said feeding device (20) comprises a rack (202) carried longitudinally by said first beam (120) at the part of said support plane (12), a first rotary actuator (200) carried by said third beam (124), at least one cogwheel (204) meshing with said rack (202) and a drive shaft (206) that couples said wheel (204) to said actuator (200) in an angularly fixed manner.

4. The machine according to any one of the preceding claims, **characterised in that** said first beam (120) has a substantially vertical inner face (1202) at the part of said support plane (12); said equipment (30) being completely contained in a volume (V) delimited by said support plane (12), by said inner face (1202) and by said third beam (124).

5. The machine according to any one of the preceding claims, **characterised in that** said equipment (30) carries a second actuator (300) and a pinion (302) which can be operated by said second actuator (300) and meshing with said rack (202) for operating said equipment (30) in said direction (D).

6. The machine according to any one of the claims 1 to 5, **characterised in that** said first beam (120) has a second guide (1205) longitudinally carried by said first beam (120) in a position below said first guide (1201) for said second slide (31) and a second longitudinal rack (1207); said equipment (30') carrying a second actuator (300') and a further pinion (302') which can be operated by said second actuator (300) and meshing/engaging with said second rack (1207) for operating said equipment (30) in said direction (D).

7. The machine according to claim 1, **characterised in that** said equipment (30) comprises a motorised screw- nut screw pair (32) that couples said third beam (124) and said equipment (30) for selectively controlling a relative movement along said direction (D).

8. The machine according to any one of the preceding claims, **characterised in that** said third beam (124) and said mobile equipment (30) are connected by a chain (50) having a given length and prearranged for carrying electric and/or fluid dynamic supply cables.

9. The cutting machine according to any one of the preceding claims, **characterised in that** it comprises control means (40) for the relative position of said mobile equipment (30) in respect to said third beam (124) prearranged for allowing the relative displacement between said third beam (124) and said mobile equipment (30) along said given direction (D).

10. The machine according to claim 9, **characterised in that** said control means (40) are of the mechanical type and comprise a rod (44)(44') ending with a first hook (440)(440') and extending along said direction (D); said rod (44)(44') being selectively carried by said third beam (124) or by said equipment (30); a second hook (440')(440) being carried by said equipment (30) or by said third beam (124) longitudinally facing said first hook (440)(440').

11. Machine according to any one of the preceding claims, **characterised in that** said first beam (124) has longitudinal abutment means (1240) for a rear element (1242) of said mobile equipment (30).

12. The machine according to any one of the preceding claims, **characterised in that** each said first and second gripping means (60)(62) is provided with a front clamp (64) (64').
